# EUROPÄISCHE PATENTSCHRIFT

(11) **EP 3 544 197 B1**
(45) Veröffentlichungstag und Bekanntmachung des Hinweises auf die Patenterteilung: **16.12.2020**
(21) Anmeldenummer: 19159912.5
(22) Anmeldetag: 28.02.2019
(51) Int. Cl.: H04B 5/00

(54) **VORRICHTUNG ZUR KONTAKTLOSEN DATENÜBERTRAGUNG**
DEVICE FOR CONTACTLESS DATA TRANSMISSION
DISPOSITIF DE TRANSMISSION DE DONNÉES SANS CONTACT

(30) Priorität: 21.03.2018 DE 102018106619
(43) Veröffentlichungstag der Anmeldung: 25.09.2019
(73) Patentinhaber: Huf Hülsbeck & Fürst GmbH & Co. KG, 42551 Velbert (DE)
(72) Erfinder: SIEG, Berthold, 46240 Bottrop (DE); WICKERT, Pascal, 46049 Oberhausen (DE)
(74) Vertreter: Patentanwälte Bals & Vogel

(56) Entgegenhaltungen:
- DE-A1-102013 015 736
- DE-A1-102014 113 910

## Beschreibung

Die vorliegende Erfindung betrifft eine Vorrichtung zur kontaktlosen Datenübertragung. Ferner bezieht sich die Erfindung auf ein Sicherheitssystem eines Fahrzeuges sowie eine Komponente für ein Fahrzeug mit einer solchen Vorrichtung.

Aus dem Stand der Technik sind Vorrichtungen zur kontaktlosen Datenübertragung bekannt. Derartige Vorrichtungen dienen bspw. zur kontaktlosen Nahbereichs- und/oder Funk-Kommunikation mit einem mobilen Identifikationsgeber, um auf diese Weise eine Authentifizierung des Identifikationsgebers durchzuführen. Eine Möglichkeit zur Authentifizierung ist die Übertragung eines Codes von dem Identifikationsgeber an das Fahrzeug, woraufhin der Code überprüft wird. Nur bei einem korrekten Code wird dann z. B. das Fahrzeug entriegelt oder es werden weitere Fahrzeugfunktionen freigegeben. Eine solche Vorrichtung zur Datenübertragung kann dabei als NFC-Schnittstelle ausgeführt sein. Entsprechend kann ein Übertragungssignal durch die Vorrichtung erzeugt werden, z. B. durch einen NFC-Reader, und zur kontaktlosen Datenübertragung über eine Antenne abgestrahlt werden. Weiter kann eine solche Vorrichtung in das Fahrzeug integriert sein, sodass der Identifikationsgeber relativ nahe an die Antenne der NFC-Schnittstelle gehalten werden muss, um die Datenübertragung durchzuführen. (NFC steht hierbei für engl. Near Field Communication.)

Grundsätzlich ist es bekannt, dass bei solchen Vorrichtungen eine Filterung des Übertragungssignals erfolgt. Diese Filterung dient z. B. zur Verbesserung der Empfangs- und/oder Sendefunktionalität.

In der Schrift DE 10 2014 113 910 A1 ist eine Kommunikationseinrichtung für ein Kraftfahrzeug offenbart, mit einer Nahfeld-Kommunikationseinrichtung, welche einen Antennenabschnitt, eine Treiberschaltung und eine zwischen Treiberschaltung und Antennenspule angeordnete Anpassungsschaltung und Filterschaltung aufweist.

Nachteilhaft bei den bekannten Lösungen ist, dass die Filterung und die hierzu genutzte Schaltung oft komplex und aufwendig ist. Insbesondere kann dabei eine gegenseitige Beeinflussung der verwendeten Spulen für die Filterung problematisch sein und die Filterung beeinträchtigen. Bekannte Maßnahmen zur Verringerung dieser Beeinflussung, wie z. B. der Einsatz magnetisch abgeschirmter Spulen, oder die Nutzung größerer Abstände zwischen den Spulen, sind dabei kosten- und/oder platzaufwendig.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung zur Verringerung von Störeinflüssen bei einer Filterung für eine Vorrichtung zur kontaktlosen Datenübertragung vorzuschlagen.

Die voranstehende Aufgabe wird gelöst durch eine Vorrichtung mit den Merkmalen des unabhängigen Vorrichtungsanspruchs, ein Sicherheitssystem mit den Merkmalen des unabhängigen Systemanspruchs sowie durch eine Komponente mit den Merkmalen des nebengeordneten Vorrichtungsanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Sicherheitssystem sowie der erfindungsgemäßen Komponente und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine Vorrichtung zur kontaktlosen Datenübertragung, vorzugsweise zur Nahfeld- und/oder NFC-Kommunikation, bevorzugt für ein Fahrzeug. Das Fahrzeug ist bspw. als Kraftfahrzeug und/oder als Personenkraftfahrzeug und/oder als Elektrofahrzeug und/oder als Hybridfahrzeug und/oder als autonomes Fahrzeug ausgebildet.

Die Datenübertragung dient dabei vorteilhafterweise dazu, einen Datenaustausch zwischen zwei Kommunikationsteilnehmern zu ermöglichen. Diese Kommunikationsteilnehmer sind bspw. die erfindungsgemäße Vorrichtung, insbesondere als eine Kommunikationsvorrichtung des Fahrzeuges, und ein mobiles (d. h. tragbares) Gerät, wie ein Identifikationsgeber oder ein Smartphone. Dabei dient die Datenübertragung z. B. dazu, eine Authentifizierung des mobilen Geräts durch das Fahrzeug durchzuführen. Hierzu kann ein Authentifizierungscode oder dergleichen über die Datenübertragung an das Fahrzeug übermittelt werden, und nach der Übermittlung durch ein (erfindungsgemäßes) Sicherheitssystem des Fahrzeuges überprüft werden. Eine erfolgreiche Authentifizierung hat bspw. zur Folge, dass automatisiert eine sicherheitsrelevante Fahrzeugfunktion aktiviert wird, z. B. eine Fahrzeugtür und/oder Heckklappe und/oder Motorhaube geöffnet wird und/oder das Fahrzeug entriegelt wird. Entsprechend kann die erfindungsgemäße Vorrichtung auch (insbesondere in Abhängigkeit von der zu aktivierenden Funktion) am Fahrzeug angeordnet sein, bspw. im Seiten- und/oder Front- und/oder Heckbereich des Fahrzeuges.

Die Datenübertragung wird bevorzugt dadurch ermöglicht, dass ein elektrisches und/oder magnetisches Feld und/oder ein Funksignal und/oder dergleichen als Informationsträger genutzt wird. So kann durch einen Kommunikationsteilnehmer ein hochfrequentes Trägersignal erzeugt werden, um eine Abstrahlung, insbesondere von hochfrequenten magnetischen Wechselfeldern, über eine Antenne zu bewirken. Ferner kann in Abhängigkeit von einer Codierung und/oder Modulation des Wechselfeldes (ggf. auch des Funksignals) ein Empfangssignal bei der erfindungsgemäßen Vorrichtung erzeugt werden. In anderen Worten kann die Übertragung zumindest teilweise dadurch kontaktlos erfolgen, dass ein Feld und/oder ein Signal und/oder ein Funksignal als elektromagnetisches Signal über eine Antenne ausgesendet wird, und anhand des ausgesendeten Felds / Signals / Funksignals ein Empfangssignal erzeugt wird. Zum Beispiel bei der Nutzung von NFC (Near Field Communication) als Kommunikationstechnologie für die Datenübertragung kann die Kommunikation zwischen den Kommunikationsteilnehmern dadurch erfolgen, dass elektromagnetische Induktion mittels loser gekoppelter Spulen der Kommunikationsteilnehmer genutzt wird. Die Spulen dienen in diesem Fall als Antennen und/oder zur induktiven Kopplung.

Es kann wenigstens ein Verarbeitungsmittel bei der erfindungsgemäßen Vorrichtung vorgesehen sein, um ein elektrische Signal zu erzeugen und/oder zu codieren und/oder auszulesen (z. B. zu demodulieren), d. h. zur Verarbeitung des elektrischen Signals. Das elektrische Signal kann das (ggf. modulierte) Trägersignal und/oder das Empfangssignal sein, welches durch die Antenne empfangen wird. Hierzu ist die Antenne z. B. als Sende-Empfangsspule, insbesondere Nahfeld-Übertragungsspule, oder dergleichen ausgeführt. Das Verarbeitungsmittel ist z. B. als ein integrierter Schaltkreis, insbesondere als ein Treiberbaustein und/oder Mikrocontroller und/oder Transceiver-IC und/oder dergleichen ausgeführt. Es kann sich dabei um einen NFC-Transponder IC oder dergleichen handeln, bspw. einen NCx3320 von NXP Semiconductors. Das Verarbeitungsmittel, welches insbesondere als Transceiver ausgebildet ist, weist z. B. wenigstens einen Empfangsanschluss (Receiver-Anschluss oder kurz Rx) und wenigstens einen Sendeanschluss (Transmitter-Anschluss oder kurz Tx) auf. Auch kann es möglich sein, dass das Verarbeitungsmittel wenigstens zwei Empfangsanschlüsse (Rx) und zwei Sendeanschlüsse (Tx) aufweist, um eine symmetrische Signalübertragung eines Übertragungssignals zu ermöglichen. Eine solche differentielle Übertragung hat u. a. Vorteile hinsichtlich der Qualität und Zuverlässigkeit der Übertragung. So können z. B. Störeinflüsse bei der Übertragung durch eine Differenzbildung aufgehoben werden. Bspw. können die Empfangsanschlüsse komplementäre Eingänge und die Sendeanschlüsse komplementäre Ausgänge bilden.

Damit ein Signal (insbesondere das Übertragungssignal) von der Antenne empfangen und/oder ausgesendet und/oder ein durch die Antenne empfangenes Signal durch das Verarbeitungsmittel ausgewertet werden kann, kann wenigstens eine Verbindungsanordnung zur Verbindung (des Verarbeitungsmittels) mit der Antenne vorgesehen sein. Auf diese Weise kann die Antenne für die kontaktlose Datenübertragung dienen. Die Verbindungsanordnung ist z. B. als eine Anordnung von elektrischen Anschlüssen oder elektrischen Leiterabschnitten (d. h. bspw. Abschnitte elektrischer Leiterbahnen) oder dergleichen ausgeführt. Auch kann die Verbindungsanordnung als wenigstens eine Leiterbahn einer Leiterplatte oder dergleichen ausgebildet sein. Ferner kann auch die Antenne mit der Verbindungsanordnung elektrisch verbunden sein. Die Antenne ist bspw. ebenfalls an der Leiterplatte angeordnet, und vorzugsweise mit wenigstens einer Leiterbahn der Leiterplatte elektrisch verbunden. Die Antenne kann als ein diskretes Bauelement, z. B. als diskrete Nahfeld-Übertragungsspule, ausgebildet sein. Darüber hinaus kann die Antenne als eine (auf der Leiterplatte) gedruckte Antenne, insbesondere PCT-Antenne (engl. Printed Circuit Board Antenna), oder dergleichen ausgebildet sein. In anderen Worten kann die Antenne (z. B. ebenfalls als eine Nahfeld-Übertragungsspule) durch wenigstens ein leitendes Element, insbesondere wenigstens eine Leiterbahn, der Leiterplatte ausgebildet sein. Die Verbindungsanordnung kann daher auch im einfachsten Falle wenigstens ein elektrisch leitendes Element und/oder wenigstens ein (elektrischer) Leiterabschnitt wenigstens einer Leiterbahn sein, und ggf. mit weiteren leitenden Elementen und/oder Leiterabschnitten der wenigstens einen oder wenigstens einer weiteren Leiterbahn verbunden sein. Auf diese Weise kann die Verbindungsanordnung zur elektrischen Verbindung der Antenne mit dem Verarbeitungsmittel dienen.

Es ist insbesondere vorgesehen, dass die Verbindungsanordnung über wenigstens zwei gegenüberliegende Übertragungspfade mit dem Verarbeitungsmittel elektrisch verbunden ist. Hierfür kann insbesondere ein erster elektrischer Anschluss der Verbindungsanordnung mit einem ersten Übertragungspfad und ein zweiter elektrischer Anschluss der Verbindungsanordnung mit einem zweiten Übertragungspfad elektrisch verbunden sein. Die jeweiligen Übertragungspfade können voneinander elektrisch getrennt ausgeführt und/oder parallel zueinander geführt sein, und jeweils das Verarbeitungsmittel mit dem entsprechenden Anschluss der Verbindungsanordnung und somit auch mit der Antenne verbinden. Insbesondere sind dabei die Übertragungspfade mit unterschiedlichen Anschlüssen des Verarbeitungsmittels und/oder der Verbindungsanordnung verbunden. Die Anschlüsse der Verbindungsanordnung können hierbei als diskrete Anschlüsse ausgebildet sein, aber auch einfach als wenigstens ein elektrisch leitendes Element und/oder Leiterabschnitt wenigstens einer Leiterbahn der Leiterplatte. Entsprechend können die Ausdrücke "Verbindungsanordnung" und/oder "Anschluss" auch ein zur Leiterbahn nicht separates ausgeführtes, Bauteil betreffen, also ein zur Leiterbahn identisches Element, und daher lediglich die Funktion der "Verbindung" bzw. des "Anschlusses" zur Antenne betreffen. In anderen Worten können die Verbindungsanordnung - und damit auch deren Anschlüsse - monolithisch und/oder einteilig und/oder materialeinheitlich und/oder in gleicher Weise zu einer Leiterbahn der Leiterplatte ausgebildet sein.

Von besonderem Vorteil bei einer differentiellen Übertragung des Übertragungssignals ist es, wenn die Übertragungspfade mit den unterschiedlichen komplementären Ein- und Ausgängen des Verarbeitungsmittels verbunden sind. So kann ein erster Übertragungspfad mit einem ersten Empfangsanschluss (Rx) und/oder ersten Sendeanschluss (Tx) und ein zweiter Übertragungspfad mit einem zweiten Empfangsanschluss (Rx) und/oder zweiten Sendeanschluss (Tx) des Verarbeitungsmittels verbunden sein. Entsprechend können der erste Übertragungspfad und der zweite Übertragungspfad komplementäre, symmetrische Signale übertragen.

Um eine effiziente Nutzung der Antenne zu ermöglichen, kann eine Anpassung der Übertragungspfade notwendig sein. Die Anpassung umfasst im Sinne dieser Erfindung z. B. eine Filterung wie eine Oberwellenunterdrückung und/oder Bandpassfilterung. Damit dient eine Anpassungsschaltung zumindest zur Bereitstellung der Filterung, insbesondere Frequenzfilterung, für diese Übertragungspfade. Entscheidend kann sein, besonders im Hinblick auf eine möglicherweise differentielle Übertragung, dass die Filterung und/oder Anpassung für beide Übertragungspfade gleichartig, insbesondere symmetrisch, bereitgestellt wird. Um die gleichartige Filterung bereitzustellen, kann in den Übertragungspfaden jeweils eine Filteranordnung der Anpassungsschaltung integriert sein, vorzugsweise sodass die Filteranordnungen gegenüberliegend angeordnet sind. Vorteilhafterweise sind die Filteranordnungen zumindest teilweise oder überwiegend gleich aufgebaut und/oder verschaltet und/oder auf einer Platine (d. h. Leiterplatte) angeordnet. Entsprechend können die Filteranordnungen jeweils wenigstens oder ausschließlich eine erste und zweite Teilanordnung aufweisen, wobei die ersten Teilanordnungen die gleichen Elemente umfassen und/oder die Elemente identisch (in der gleichen Reihenfolge) verschaltet sind und/oder die ersten Teilanordnungen gleich aufgebaut sind. In anderen Worten sind die ersten Teilanordnungen gleich. Zumindest oder ausschließlich durch die zweiten Teilanordnungen können sich die Filteranordnungen hingegen unterscheiden. Bevorzugt weisen dabei die Filteranordnungen gemäß der ersten Teilanordnung zueinander symmetrisch mehrere funktionsgleiche Elemente auf und/oder gemäß der zweiten Teilanordnung zumindest zwei funktionsgleiche Filterglieder auf, wobei letztere von der ersten Teilanordnung abweichend, also insbesondere nicht gemäß der Symmetrie der ersten Teilanordnung, ausgeführt sind. Die Filterglieder können also z. B. asymmetrisch oder mit einer anderen Symmetrie zueinander ausgeführt sein. Bspw. kann sich eine Reihenfolge der Verschaltung der Elemente der Filterglieder voneinander unterscheiden. Das jeweilige Filterglied weist bspw. wenigstens oder genau ein erstes Element, wie einen Widerstand, und ein zweites Element, wie eine Spule, auf. Bevorzugt unterscheiden sich dabei die zweiten Teilanordnungen und/oder die Filterglieder nur durch die Verschaltungsreihenfolge und/oder durch die geometrische Anordnung der Elemente der Filterglieder, welche insbesondere eine geometrisch andere Symmetrie als die erste Teilanordnung bewirkt. Dagegen kann die Funktion der beiden zweiten Teilanordnungen (wie auch der ersten Teilanordnungen zueinander) gleich sein. Dies ist insbesondere dadurch begründet, dass die Reihenfolge der Elemente der Filterglieder funktional keine (signifikante) Rolle spielt.

Unter Symmetrie kann im Rahmen der Erfindung dabei sowohl eine räumliche (geometrische) als auch eine schaltungstechnische Symmetrie verstanden werden. In anderen Worten können die Elemente der Filteranordnungen zueinander schaltungstechnisch symmetrisch sein, insbesondere gemäß der ersten Teilanordnung, wenn die Elemente sowohl bei der ersten als auch der zweiten Filteranordnung (also doppelt) vorkommen und in gleicher Weise miteinander verschaltet sind. Ferner können die Elemente zueinander räumlich symmetrisch sein, insbesondere gemäß der ersten Teilanordnung, wenn die Elemente sowohl bei der ersten als auch der zweiten Filteranordnung (also doppelt) vorkommen und symmetrisch zueinander auf einer Leiterplatte angeordnet sind. Die Filterglieder gemäß der zweiten Teilanordnung weisen diese schaltungstechnische und/oder räumliche Symmetrie insbesondere nicht oder zumindest nicht in gleicher Weise auf. Bevorzugt können die Elemente, insbesondere auch die Filterglieder, dieselben Werte aufweisen, um eine gleichartige Filterung (also gleichartige Funktion) bereitzustellen. Aufgrund der abweichenden Anordnung der Filterglieder kann dabei der Vorteil erzielt werden, dass eine gegenseitige Beeinflussung, insbesondere magnetische Kopplung, der Filterglieder untereinander zumindest reduziert wird. Hierzu können z. B. die Elemente einer der Filterglieder gegenüber dem anderen Filterglied schaltungstechnisch und/oder räumlich getauscht werden. Darüber hinaus kann dadurch der Platzaufwand verringert werden, d. h. kein zusätzlicher Platzaufwand notwendig sein, um die gegenseitige Beeinflussung durch räumliche Abstände zu verringern.

Weiter ist im Rahmen der Erfindung denkbar, dass die funktionsgleichen Filterglieder dadurch von der Symmetrie der ersten Teilanordnung abweichend ausgeführt sind, dass die Verschaltungsreihenfolge der einzelnen Elemente der Filterglieder unterschiedlich ausgeführt ist. Dadurch wird eine einfache Maßnahme bereitgestellt, um die gegenseitige Beeinflussung zu reduzieren. Eine unterschiedliche Verschaltungsreihenfolge hat dabei den Vorteil, dass sich räumlich benachbarte (am nächsten beieinander auf der Leiterplatte angeordnete) Elemente unterschiedlicher Filterglieder gemäß der zweiten Teilanordnung voneinander unterscheiden, also nicht funktionsgleich sind. Bspw. liegt hierbei auf der Leiterplatte eine Spule eines ersten Filterglieds näher an einem Widerstand eines zweiten Filterglieds als an einer Spule des zweiten Filterglieds. Damit wird die gegenseitige Störung durch die Spulen der Filterglieder verringert oder verhindert. Die Spule und der Widerstand sind nicht zueinander funktionsgleich. Dagegen sind die beispielhaften Filterglieder, jeweils mit Spule und Widerstand, zueinander funktionsgleich.

Außerdem ist es von Vorteil, wenn die funktionsgleichen Filterglieder jeweils als einzelne Elemente wenigstens ein Widerstandselement, insbesondere einen elektrischen Widerstand, und wenigstens ein Spulenelement, insbesondere eine elektrische Spule, aufweisen, und vorzugsweise jeweils als RL-Glied ausgeführt sind. Das jeweilige Widerstandselement und/oder das jeweilige Spulenelement können dabei als SMD (Surface-mounted device) Bauelement ausgeführt sein. Auch kann es möglich sein, dass das jeweilige Spulenelement direkt auf der Leiterplatte gedruckt ist. Damit ist eine platzsparende Filterung möglich.

Es kann von Vorteil sein, wenn im Rahmen der Erfindung die Filteranordnungen überwiegend eine zueinander symmetrische Schaltungstopologie aufweisen, wobei sich die Schaltungstopologien, insbesondere nur durch eine unterschiedliche Anordnung der Filterglieder voneinander unterscheiden. Hierdurch kann die Funktion gleichartig für beide Übertragungspfade erfolgen und dennoch aufgrund der unterschiedlichen Symmetrie die gegenseitige Beeinflussung verringert werden.

Ferner kann es im Rahmen der Erfindung vorgesehen sein, dass die Filterglieder jeweils ein Spulenelement und ein weiteres Element, insbesondere Widerstandselement, aufweisen, wobei vorzugsweise die Spulenelemente mit einem im Wesentlichen gleichen Kapazitätswert und/oder baugleich ausgeführt sind, und bevorzugt räumlich versetzt zueinander auf einer Leiterplatte angeordnet sind. Damit kann gewährleistet werden, dass die Filteranordnungen funktionsgleich ausgebildet sind, und auch im Betrieb funktionsgleich in gewünschter Weise arbeiten - da die gegenseitige Beeinflussung und damit Störung zumindest reduziert wird.

In einer weiteren Möglichkeit kann vorgesehen sein, dass die Anpassungsschaltung eine Filterung bei einem elektrischen Signal durchführt, welches vorzugsweise über die Übertragungspfade zur Datenübertragung übertragbar ist, sodass das Signal an eine Kommunikationstechnologie der kontaktlosen Datenübertragung anpassbar ist, vorzugsweise durch eine Bandpass-Filterung mit einer Mittenfrequenz, welche an eine Trägerfrequenz der Kommunikationstechnologie angepasst ist. Auf diese Weise kann das Signal zur kontaktlosen Datenübertragung über die Antenne optimiert werden.

Gemäß einer vorteilhaften Weiterbildung der Erfindung kann vorgesehen sein, dass die Vorrichtung zur Durchführung der kontaktlosen Datenübertragung mittels Nahfeldkommunikation als Kommunikationstechnologie ausgeführt ist, wobei vorzugsweise die Anpassungsschaltung zur Filterung derart ausgeführt ist, dass eine Bandpassfilterung mit einer Mittenfrequenz von zumindest im Wesentlichen 13,56 MHz und/oder einer NFC-Frequenz durchführbar ist. Damit kann das Signal optimal für die Übertragung mittels NFC angepasst werden.

Vorteilhaft ist es darüber hinaus, wenn im Rahmen der Erfindung die funktionsgleichen Filterglieder derart benachbart an einer Leiterplatte befestigt sind, dass die gegenseitige Beeinflussung der Filterglieder zumindest reduzierbar ist, vorzugsweise dadurch, dass die einzelnen Elemente eines ersten Filterglieds räumlich parallel zu den einzelnen Elementen eines zweiten Filterglieds angeordnet sind, wobei funktionsungleiche Elemente der Filterglieder räumlich näher zueinander angeordnet sind als funktionsgleiche Elemente. Auf diese Weise kann eine besonders platzsparende Anordnung bereitgestellt werden. Funktionsgleiche Elemente sind bspw. die Widerstandselemente zueinander. Ebenfalls funktionsgleich sind die Spulenelemente. Funktionsungleich sind hingegen ein Widerstandselement und ein Spulenelement.

Ferner ist es optional vorgesehen, dass die funktionsgleichen Filterglieder derart versetzt und benachbart an einer Leiterplatte befestigt (d. h. auch darin integriert) sind, dass eine induktive Kopplung zwischen Spulenelementen der Filterglieder reduziert wird. Damit kann ein Störeinfluss zumindest verringert werden.

Ferner kann im Rahmen der Erfindung vorgesehen sein, dass einzelne Elemente der Filterglieder derart an einer Leiterplatte benachbart befestigt sind, dass die Elemente maximal 5 cm oder maximal 3 cm oder maximal 1 cm voneinander entfernt sind. Damit wird eine platzsparende Anordnung bereitgestellt, sodass sich die erfindungsgemäße Vorrichtung in einfacher Weise in einen Türgriff oder dergleichen integrieren lässt. Die genannte Entfernung der Elemente zueinander kann bspw. dadurch bestimmt werden, dass der Abstand der am nächsten beieinanderliegenden Punkte jeweiliger Elemente ermittelt wird (z. B. am Gehäuserand).

Es kann ferner möglich sein, dass die Filteranordnungen gegenüberliegend angeordnet sind, und jeweils einen seriellen Schwingkreis und jeweils einen parallelen Schwingkreis zur Filterung aufweisen, welche vorzugsweise mit einem jeweiligen Kopplungskondensator verbunden sind, wobei bevorzugt die beiden seriellen Schwingkreise die Filterglieder aufweisen. Insbesondere kann es möglich sein, dass ein erster serieller Schwingkreis über einen ersten Kopplungskondensator mit einem ersten parallelen Schwingkreis elektrisch verbunden ist. Weiter kann es möglich sein, dass ein zweiter serieller Schwingkreis über einen zweiten Kopplungskondensator mit einem zweiten parallelen Schwingkreis elektrisch verbunden ist. Dies ermöglicht eine besonders zuverlässige kontaktlose Datenübertragung.

Beispielsweise kann es vorgesehen sein, dass das Verarbeitungsmittel zum Empfang von Authentifizierungsdaten mittels der Datenübertragung ausgeführt ist, und elektrisch mit einer Fahrzeugelektronik verbindbar ist, um die Authentifizierungsdaten an die Fahrzeugelektronik zu übertragen, wobei vorzugsweise die Vorrichtung zur Integration in einen Türgriff eines Fahrzeuges ausgeführt ist. Ferner kann es möglich sein, dass bspw. bei Annäherung an den Türgriff (z. B. detektiert durch einen Annäherungssensor im Türgriff) die Datenübertragung initiiert wird. Auf diese Weise ist eine einfache und komfortable Authentifizierung möglich, um bspw. eine sicherheitsrelevante Fahrzeugfunktion zu aktivieren.

Ebenfalls Gegenstand der Erfindung ist ein Sicherheitssystem für ein Fahrzeug, aufweisend
- eine Fahrzeugelektronik,
- eine Vorrichtung, insbesondere erfindungsgemäße Vorrichtung, zur kontaktlosen Datenübertragung, vorzugsweise zur NFC-Kommunikation.

Dabei kann die Vorrichtung wenigstens ein Verarbeitungsmittel und wenigstens eine Verbindungsanordnung zur Verbindung mit einer Antenne für die Datenübertragung aufweisen. Hierbei ist vorgesehen, dass die Verbindungsanordnung über wenigstens zwei gegenüberliegende (d. h. gegenüberliegend, bspw. parallel, angeordnete und/oder verschaltete) Übertragungspfade mit dem Verarbeitungsmittel elektrisch verbunden ist.

Darüber hinaus kann die Vorrichtung eine Anpassungsschaltung zumindest zur Bereitstellung einer Filterung für diese Übertragungspfade aufweisen, wobei in den Übertragungspfaden jeweils eine Filteranordnung der Anpassungsschaltung integriert (d. h. schaltungstechnisch angeordnet) ist, um die Filterung gleichartig für die Übertragungspfade bereitzustellen. Unter gleichartig kann dabei verstanden werden, dass die Übertragungsfunktionen der Filterungen zumindest zu 90 % identisch ist. Dies kann vorteilhafterweise dadurch erfolgen, dass die Filteranordnungen gemäß einer ersten Teilanordnung zueinander symmetrisch mehrere funktionsgleiche Elemente aufweisen und/oder gemäß einer zweiten Teilanordnung zumindest zwei funktionsgleiche Filterglieder aufweisen, welche von der ersten Teilanordnung (also von deren Symmetrie) abweichend ausgeführt sind. Damit bringt das erfindungsgemäße Sicherheitssystem die gleichen Vorteile mit sich, wie sie ausführlich mit Bezug auf eine erfindungsgemäße Vorrichtung beschrieben worden sind.

Ebenfalls Gegenstand der Erfindung ist eine Komponente, insbesondere ein Türgriff, vorzugsweise Außentürgriff, für ein Fahrzeug. Hierbei ist vorgesehen, dass die Komponente eine erfindungsgemäße Vorrichtung aufnimmt. Damit bringt die erfindungsgemäße Komponente die gleichen Vorteile mit sich, wie sie ausführlich mit Bezug auf eine erfindungsgemäße Vorrichtung beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Seitenansicht eines Fahrzeuges,
- Figur 2: ein schematisches Schaltbild einer erfindungsgemäßen Vorrichtung,
- Figur 3: eine schematische Draufsicht auf einen Ausschnitt einer Leiterplatte der erfindungsgemäßen Vorrichtung.

In den nachfolgenden Figuren werden für die gleichen technischen Merkmale auch von unterschiedlichen Ausführungsbeispielen die identischen Bezugszeichen verwendet.

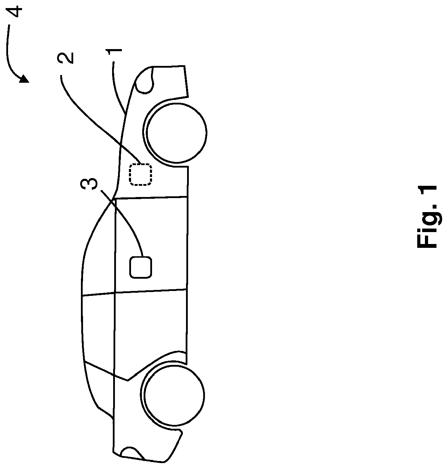

In Figur 1 ist schematisch ein Fahrzeug 1 in einer Seitenansicht gezeigt. Es ist dargestellt, dass das Fahrzeug 1 eine Fahrzeugelektronik 2, einen Außentürgriff 3 sowie ein erfindungsgemäßes Sicherheitssystem 4 aufweisen kann. Bspw. ist das erfindungsgemäße Sicherheitssystem 4 elektrisch oder drahtlos über Funk mit der Fahrzeugelektronik 2 verbunden, um Authentifizierungsinformationen auszutauschen. Hierzu kann das erfindungsgemäße Sicherheitssystem 4 die Authentifizierungsinformation über eine erfindungsgemäße Vorrichtung 10 kabellos empfangen, welche z. B. im Außentürgriff 3 angeordnet ist. Die erfindungsgemäße Vorrichtung 10 ist bspw. als eine NFC-Schnittstellenvorrichtung 10 ausgebildet, um eine kabellose Datenübertragung mittels NFC zu ermöglichen. Die Integration der Vorrichtung 10 in den Außentürgriff 3 - alternativ oder zusätzlich auch in anderen Komponenten des Fahrzeuges 1 - erfordert dabei eine platzsparende Ausbildung der Vorrichtung 10.

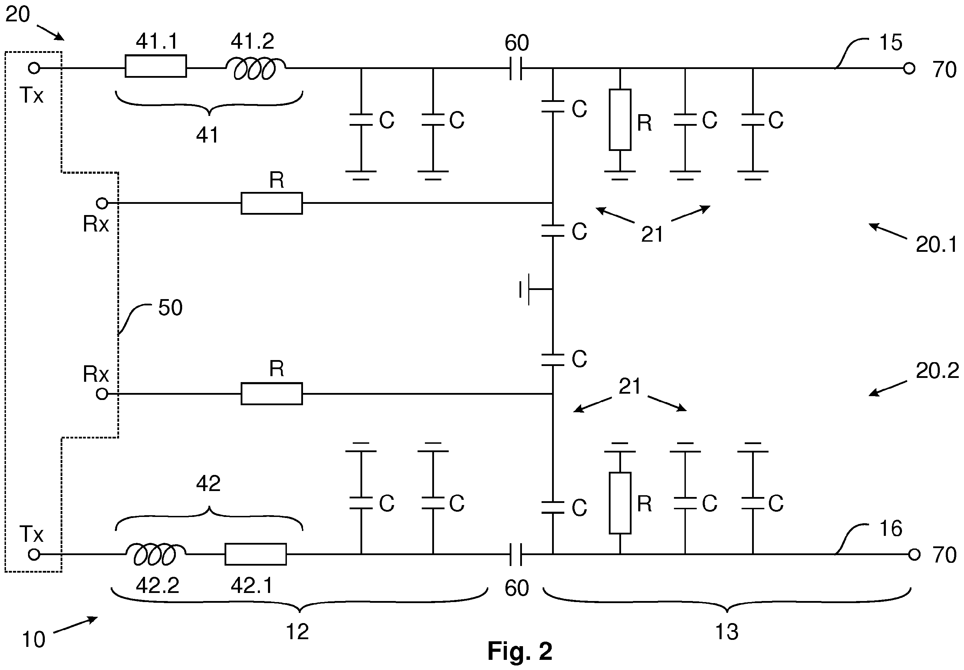

In Figur 2 gezeigt ist ein schematisches Schaltbild einer erfindungsgemäßen Vorrichtung 10 zur kontaktlosen Datenübertragung, vorzugsweise zur NFC-Kommunikation, bevorzugt für ein Fahrzeug 1. Es ist erkennbar, dass wenigstens ein Verarbeitungsmittel 50 zur Verarbeitung eines elektrischen Signals vorgesehen ist. Dieses Verarbeitungsmittel 50 ist bspw. als integrierter Schaltkreis oder dergleichen ausgebildet, um wenigstens eine Funktion zur kontaktlosen Datenübertragung bereitzustellen. Um ein durch das Verarbeitungsmittel 50 erzeugtes Signal kontaktlos zu übertragen und/oder ein kontaktlos übertragenes Signal zu empfangen, muss das Verarbeitungsmittel 50 mit einer Antenne verbunden werden. Die Antenne ist in Figur 2 nicht explizit gezeigt, um eine vereinfachte Darstellung der Schaltung zu ermöglichen. Um die Anordnung der Antenne in der Schaltung erkenntlich zu machen, ist hingegen repräsentativ eine Verbindungsanordnung 70 gezeigt. Die Verbindungsanordnung 70 kann somit als Antennenanschluss und/oder als elektrischer Leiterabschnitt, der zur Antenne hinführt, verstanden werden. Die Antenne ist z. B. als gedruckte, also PCB-, Nahfeld-Übertragungsspule ausgebildet.

Die Verbindungsanordnung 70 dient somit zur Verbindung mit der Antenne für die Datenübertragung, und kann hierzu über wenigstens zwei gegenüberliegende Übertragungspfade 15, 16 mit dem Verarbeitungsmittel 50 elektrisch verbunden sein. Insbesondere führen die Übertragungspfade 15, 16 von der Antenne (bzw. der Verbindungsanordnung 70) zu Eingängen (Rx) und/oder Ausgängen (Tx) des Verarbeitungsmittels 50. Die Eingänge Rx dienen bspw. zum Empfangen eines elektrischen Signals von der Antenne, und die Ausgänge Tx bspw. zum Aussenden des elektrischen Signals an die Antenne.

Ferner kann eine Anpassungsschaltung 20 zumindest zur Bereitstellung einer Filterung (insbesondere Bandpassfilterung) für diese Übertragungspfade 15, 16 vorgesehen sein. In den Übertragungspfaden 15, 16 kann hierzu jeweils eine Filteranordnung 20.1, 20.2 der Anpassungsschaltung 20 integriert sein. Auf diese Weise kann z. B. jeweils ein serieller 12 und ein paralleler Schwingkreis 13 bereitgestellt werden. Der jeweilige serielle Schwingkreis 12 und der jeweilige parallele Schwingkreis 13 können vorzugsweise mit einem Kopplungskondensator 60 verbunden sein, um die Filterung zu optimieren.

Dabei sind die Filteranordnungen 20.1, 20.2 gegenüberliegend in der Schaltung angeordnet, also auf parallelen Pfaden. Optional können die Elemente der Filteranordnungen 20.1, 20.2 auch geometrisch auf der Leiterplatte gegenüberliegend bzw. parallel angeordnet sein.

Es kann möglich sein, dass die Filterung dadurch gleichartig für die Übertragungspfade 15, 16 bereitgestellt wird, dass die Filteranordnungen 20.1, 20.2 gemäß einer ersten Teilanordnung zueinander symmetrisch mehrere funktionsgleiche Elemente 21 aufweisen und gemäß einer zweiten Teilanordnung zumindest zwei funktionsgleiche Filterglieder 41, 42 aufweisen, welche von der Symmetrie der ersten Teilanordnung abweichend ausgeführt sind. Beispielhaft gezeigt sind in Figur 2 mehrere Widerstände R und Kondensatoren C als funktionsgleiche Elemente 21, die symmetrisch zueinander angeordnet sind. Eine solche Anordnung gemäß der ersten Teilanordnung findet sich beispielhaft in dem parallelen Schwingkreis 13 der erfindungsgemäßen Vorrichtung 10.

Dabei können die funktionsgleichen Filterglieder 41, 42 dadurch von der Symmetrie der ersten Teilanordnung abweichend ausgeführt sein, dass die Verschaltungsreihenfolge der einzelnen Elemente 41.1, 41.2, 42.1, 42.2 der Filterglieder 41, 42 zueinander unterschiedlich ausgeführt ist. Dies ist in Figur 2 dadurch realisiert, dass die Reihenfolge eines Spulenelements 41.2, 42.2 und des zugeordneten Widerstandselements 41.1, 42.1 jeweiliger Filterglieder 41, 42 vertauscht ist. Auf diese Weise können die funktionsgleichen Filterglieder 41, 42 jeweils als einzelne Elemente wenigstens ein Widerstandselement 41.1, 42.1 und wenigstens ein Spulenelement 41.2, 42.2 aufweisen und entsprechend jeweils als RL-Glied ausgeführt sein.

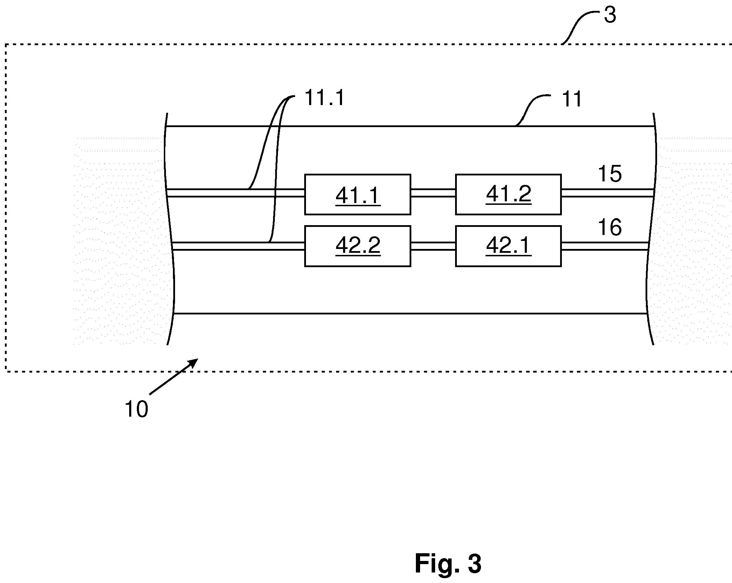

In Figur 3 ist schematisch eine Leiterplatte 11 mit zwei Leiterbahnen 11.1 gezeigt, welche die Übertragungspfade 15, 16 bilden. Die Leiterplatte 11 kann z. B. in einem Türgriff 3 eines Fahrzeuges 1 angeordnet sein. Ferner ist gezeigt, dass die Filterglieder 41, 42 jeweils ein Spulenelement 41.2, 42.2 und ein weiteres Element 41.1, 42.1, insbesondere Widerstandselement 41.1, 42.1, aufweisen können, wobei die Spulenelemente 41.2, 42.2 räumlich versetzt zueinander auf der Leiterplatte 11 (d. h. Leiterplatte 11) angeordnet sind. Entsprechend sind die funktionsgleichen Filterglieder 41, 42 derart benachbart an der Leiterplatte 11 befestigt, dass die gegenseitige Beeinflussung der Filterglieder 41, 42 reduzierbar ist, vorzugsweise dadurch, dass die einzelnen Elemente 41.1, 41.2 eines ersten Filterglieds 41 räumlich parallel zu den einzelnen Elementen 42.1, 42.2 eines zweiten Filterglieds 42 angeordnet sind, wobei funktionsungleiche Elemente 41.1, 42.2 bzw. 41.2, 42.1 der Filterglieder 41, 42 räumlich näher zueinander angeordnet sind als funktionsgleiche Elemente 41.1, 42.1 bzw. 41.2, 42.2. So ist ein erstes Spulenelement 41.2 und ein erstes Widerstandselement 41.1 eines ersten Filterglieds 41 in Figur 2 und 3 in anderer Reihenfolge verschaltet als ein zweites Spulenelement 42.2 und ein zweites Widerstandselement 42.1 eines zweiten Filterglieds 42.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Fahrzeugelektronik
- 3: Türgriff
- 4: Sicherheitssystem

- 10: Vorrichtung, NFC-Schnittstellenvorrichtung
- 11: Leiterplatte
- 11.1: Leiterbahn
- 12: serieller Schwingkreis
- 13: paralleler Schwingkreis
- 15: erster Übertragungspfad
- 16: zweiter Übertragungspfad

- 20: Anpassungsschaltung
- 20.1: erste Filteranordnung
- 20.2: zweite Filteranordnung
- 21: Elemente

- 41: erstes Filterglied, erstes RL-Glied
- 41.1: Widerstandselement
- 41.2: Spulenelement
- 42: zweites Filterglied, zweites RL-Glied
- 42.1: Widerstandselement
- 42.2: Spulenelement

- 50: Verarbeitungsmittel

- 60: Kopplungskondensator
- 70: Verbindungsanordnung

- Rx: Receiver-Anschluss
- Tx: Transmitter-Anschluss

## Patentansprüche

1. Vorrichtung (10) zur kontaktlosen Datenübertragung, vorzugsweise zur NFC-Kommunikation, bevorzugt für ein Fahrzeug (1), aufweisend:
- wenigstens ein Verarbeitungsmittel (50),
- wenigstens eine Verbindungsanordnung (70) zur Verbindung mit einer Antenne für die Datenübertragung, wobei die Verbindungsanordnung (70) über wenigstens zwei gegenüberliegende Übertragungspfade (15, 16) mit dem Verarbeitungsmittel (50) elektrisch verbunden ist,
- eine Anpassungsschaltung (20) zumindest zur Bereitstellung einer Filterung für diese Übertragungspfade (15, 16),
wobei in den Übertragungspfaden (15, 16) jeweils eine Filteranordnung (20.1, 20.2) der Anpassungsschaltung (20) integriert ist, um die Filterung dadurch gleichartig für die Übertragungspfade (15, 16) bereitzustellen, dass die Filteranordnungen (20.1, 20.2) gemäß einer ersten Teilanordnung zueinander symmetrisch mehrere funktionsgleiche Elemente (21) aufweisen und gemäß einer zweiten Teilanordnung zumindest zwei funktionsgleiche Filterglieder (41, 42) aufweisen, welche von der Symmetrie der ersten Teilanordnung abweichend ausgeführt sind, wobei
die funktionsgleichen Filterglieder (41, 42) derart versetzt benachbart an einer Leiterplatte (11) befestigt sind, dass die gegenseitige Beeinflussung der Filterglieder (41, 42) reduzierbar ist.

2. Vorrichtung (10) nach Anspruch 1,
wobei die funktionsgleichen Filterglieder (41, 42) dadurch von der Symmetrie der ersten Teilanordnung abweichend ausgeführt sind, dass die Verschaltungsreihenfolge der einzelnen Elemente (41.1, 41.2, 42.1, 42.2) der Filterglieder (41, 42) unterschiedlich ausgeführt ist.

3. Vorrichtung (10) nach Anspruch 1 oder 2,
wobei die funktionsgleichen Filterglieder (41, 42) jeweils als einzelne Elemente wenigstens ein Widerstandselement (41.1, 42.1) und wenigstens ein Spulenelement (41.2, 42.2) aufweisen, und vorzugsweise jeweils als RL-Glied ausgeführt sind.

4. Vorrichtung (10) nach einem der vorhergehenden Ansprüche,
wobei die Filteranordnungen (20.1, 20.2) überwiegend eine zueinander symmetrische Schaltungstopologie aufweisen, wobei sich die Schaltungstopologien, insbesondere nur durch eine unterschiedliche Anordnung der Filterglieder (41, 42) voneinander unterscheiden.

5. Vorrichtung (10) nach einem der vorhergehenden Ansprüche,
wobei die Filterglieder (41, 42) jeweils ein Spulenelement (41.2, 42.2) und ein weiteres Element (41.1, 42.1), insbesondere Widerstandselement (41.1, 42.1), aufweisen, wobei die Spulenelemente (41.2, 42.2) mit einem im Wesentlichen gleichen Kapazitätswert und/oder baugleich ausgeführt sind, und räumlich versetzt zueinander auf einer Leiterplatte (11) angeordnet sind.

6. Vorrichtung (10) nach einem der vorhergehenden Ansprüche,
wobei die Anpassungsschaltung (20) eine Filterung bei einem elektrischen Signal durchführt, welches über die Übertragungspfade (15, 16) zur Datenübertragung übertragbar ist, sodass das Signal an eine Kommunikationstechnologie der kontaktlosen Datenübertragung anpassbar ist, vorzugsweise durch eine Bandpass-Filterung mit einer Mittenfrequenz, welche an eine Trägerfrequenz der Kommunikationstechnologie angepasst ist.

7. Vorrichtung (10) nach einem der vorhergehenden Ansprüche,
wobei die Vorrichtung (10) zur Durchführung der kontaktlosen Datenübertragung mittels Nahfeldkommunikation als Kommunikationstechnologie ausgeführt ist, wobei vorzugsweise die Anpassungsschaltung (20) zur Filterung derart ausgeführt ist, dass eine Bandpassfilterung mit einer NFC-Frequenz als Mittenfrequenz, vorzugsweise einer Mittenfrequenz von zumindest nahezu 13,56 MHz, durchführbar ist.

8. Vorrichtung (10) nach einem der vorhergehenden Ansprüche,
wobei die funktionsgleichen Filterglieder (41, 42) derart versetzt benachbart an der Leiterplatte (11) befestigt sind, dass die gegenseitige Beeinflussung der Filterglieder (41, 42) reduzierbar ist, nämlich dadurch, dass die einzelnen Elemente (41.1, 41.2) eines ersten Filterglieds (41) räumlich parallel zu den einzelnen Elementen (42,1, 42.2) eines zweiten Filterglieds (42) angeordnet sind, wobei funktionsungleiche Elemente (41.1, 42.2) (41.2, 42.1) der Filterglieder (41, 42) räumlich näher zueinander angeordnet sind als funktionsgleiche Elemente (41.1, 42.1) (41.2, 42.2).

9. Vorrichtung (10) nach einem der vorhergehenden Ansprüche,
wobei die funktionsgleichen Filterglieder (41, 42) derart versetzt und benachbart an einer Leiterplatte (11) befestigt sind, dass eine induktive Kopplung zwischen Spulenelementen (41.2, 42.2) der Filterglieder (41, 42) reduziert wird.

10. Vorrichtung (10) nach einem der vorhergehenden Ansprüche,
wobei einzeine Elemente der Filterglieder (41, 42) derart an einer Leiterplatte (11) benachbart befestigt sind, dass die Elemente maximal 5 cm oder maximal 3 cm oder maximal 1 cm voneinander entfernt sind.

11. Vorrichtung (10) nach einem der vorhergehenden Ansprüche,
wobei die Filteranordnungen (20.1, 20.2) gegenüberliegend angeordnet sind, und jeweils einen seriellen Schwingkreis (12) und jeweils einen parallelen Schwingkreis (13) zur Filterung aufweisen, welche vorzugsweise mit einem Kopplungskondensator (60) verbunden sind, wobei bevorzugt die beiden seriellen Schwingkreise (13) die Filterglieder (41, 42) aufweisen.

12. Vorrichtung (10) nach einem der vorhergehenden Ansprüche,
wobei das Verarbeitungsmittel (50) zum Empfang von Authentifizierungsdaten mittels der Datenübertragung ausgeführt ist, und elektrisch mit einer Fahrzeugelektronik (2) verbindbar ist, um die Authentifizierungsdaten an die Fahrzeugelektronik (2) zu übertragen, wobei vorzugsweise die Vorrichtung (10) zur Integration in einen Türgriff (3) eines Fahrzeuges (1) ausgeführt ist.

13. Sicherheitssystem (4) für ein Fahrzeug (1), aufweisend
- eine Fahrzeugelektronik (2),
- eine Vorrichtung (10) nach einem der vorhergehenden Ansprüche.

14. Komponente (3), insbesondere Türgriff (3), für ein Fahrzeug (1), wobei die Komponente eine Vorrichtung (10) nach einem der Ansprüche 1 bis 12 aufweist.

## Claims

1. Device (10) for contactless data transmission, preferably for NFC communication, preferably for a vehicle (1), comprising:
- at least one processing means (50),
- at least one connection arrangement (70) for a connection to an antenna for the data transmission, wherein the connection arrangement (70) is electrically connected to the processing means (50) via at least two opposite transmission paths (15, 16),
- an adaptation circuit (20) at least for providing filtering for these transmission paths (15, 16),
wherein a respective filter arrangement (20.1, 20.2) of the adaptation circuit (20) is integrated in each of the transmission paths (15, 16) in order to provide the filtering in the same way for the transmission paths (15, 16), wherein the filter arrangements (20.1, 20.2) comprise a plurality of functionally identical elements (21) which are symmetrical to one another according to a first sub-arrangement, and comprise at least two functionally identical filter members (41, 42) according to a second sub-arrangement, which are designed differently from the symmetry of the first sub-arrangement, wherein
the functionally identical filter members (41, 42) are fixed to a printed circuit board (11) adjacent to one another in an offset manner in such a way that the mutual interference of the filter members (41, 42) can be reduced.

2. Device (10) according to claim 1,
**wherein** the functionally identical filter members (41, 42) are designed differently from the symmetry of the first sub-arrangement in such a way that the switching sequence of the individual elements (41.1, 41.2, 42.1, 42.2) of the filter members (41, 42) is designed differently.

3. Device (10) according to claim 1 or 2,
**wherein** the functionally identical filter members (41, 42) each comprise as individual elements at least one resistor element (41.1, 42.1) and at least one coil element (41.2, 42.2), and are preferably each designed as an RL member.

4. Device (10) according to one of the previous claims,
**wherein** the filter arrangements (20.1, 20.2) predominantly comprise a circuit topology which is symmetrical to one another, wherein the circuit topologies differ from one another, in particular only by a different arrangement of the filter members (41, 42).

5. Device (10) according to one of the previous claims,
**wherein** the filter members (41, 42) each comprise a coil element (41.2, 42.2) and a further element (41.1, 42.1), in particular a resistor element (41.1, 42.1), wherein the coil elements (41.2, 42.2) are designed with substantially the same capacitance value and/or identical in construction, and are arranged spatially offset relative to one another on a printed circuit board (11).

6. Device (10) according to one of the previous claims,
**wherein** the adaption circuit (20) performs filtering on an electrical signal which is transmittable via the transmission paths (15, 16) for data transmission, so that the signal is adaptable to a communication technology of the contactless data transmission, preferably by band-pass filtering with a center frequency adapted to a carrier frequency of the communication technology.

7. Device (10) according to one of the previous claims,
**wherein** the device (10) for performing the contactless data transmission by means of near-field communication is designed as a communication technology, wherein preferably the adaption circuit (20) for filtering is designed in such a way that a band-pass filtering can be carried out with an NFC frequency as the center frequency, preferably a center frequency of at least almost 13.56 MHz.

8. Device (10) according to one of the previous claims,
**wherein** the functionally identical filter members (41, 42) are fixed to the printed circuit board (11) adjacent to one another in an offset manner in such a way that the mutual interference of the filter members (41, 42) can be reduced, namely due to the fact that the individual elements (41.1, 41.2) of a first filter member (41) are arranged spatially parallel to the individual elements (42.1, 42.2) of a second filter member (42), wherein functionally unequal elements (41.1, 42.2) (41.2, 42.1) of the filter members (41, 42) are arranged spatially closer to one another than functionally equal elements (41.1, 42.1) (41.2, 42.2).

9. Device (10) according to one of the previous claims,
**wherein** the functionally identical filter members (41, 42) are fixed to a printed circuit board (11) adjacent to one another in an offset manner in such a way that an inductive coupling between coil elements (41.2, 42.2) of the filter members (41, 42) is reduced.

10. Device (10) according to one of the previous claims,
**wherein** individual elements of the filter members (41, 42) are fixed adjacent to one another to a printed circuit board (11) in such a way that the elements are at most 5 cm or at most 3 cm or at most 1 cm apart from one another.

11. Device (10) according to one of the previous claims,
**wherein** the filter arrangements (20.1, 20.2) are arranged opposite to one another and each comprise a serial resonant circuit (12) and each comprise a parallel resonant circuit (13) for filtering, which are preferably connected to a coupling capacitor (60), wherein the two serial resonant circuits (13) preferably comprise the filter members (41, 42).

12. Device (10) according to one of the previous claims,
**wherein** the processing means (50) is designed to receive authentication data by means of the data transmission, and can be electrically connected to a vehicle electronic system (2) in order to transmit the authentication data to the vehicle electronic system (2), wherein preferably the device (10) is designed for integration into a door handle (3) of a vehicle (1).

13. Security system (4) for a vehicle (1), comprising
- a vehicle electronic system (2),
- a device (10) according to one of the preceding claims.

14. Component (3), in particular a door handle (3), for a vehicle (1), wherein the component comprises a device (10) according to one of claims 1 to 12.

## Revendications

1. Dispositif (10) de transmission de données sans contact, de préférence pour la communication NFC, de préférence pour un véhicule (1), comprenant :
- au moins un moyen de traitement (50),
- au moins un disposition de connexion (70) pour la connexion à une antenne pour la transmission de données, le disposition de connexion (70) étant relié électriquement au moyen de traitement (50) par au moins deux voies de transmission opposées (15, 16),
- un circuit d'adaptation (20) permettant au moins d'assurer le filtrage de ces voies de transmission (15, 16),
où un disposition de filtrage (20.1, 20.2) du circuit d'adaptation (20) est intégré respectivement dans les voies de transmission (15, 16) pour assurer le filtrage de la même manière pour les voies de transmission (15, 16), où les dispositions de filtrage (20.1, 20.2) présentent plusieurs éléments (21) fonctionnellement identiques et symétriques entre eux selon un premier sous-disposition et au moins deux éléments de filtrage (41, 42) fonctionnellement identiques selon un deuxième sous-disposition, qui sont conçus différemment de la symétrie du premier sous-disposition, où
les éléments de filtrage (41, 42) fonctionnellement identiques sont fixés sur une carte de circuit imprimé (11) adjacente de manière décalée de telle sorte que l'interférence mutuelle des éléments de filtrage (41, 42) puisse être réduite.

2. Dispositif (10) selon la revendication 1,
**où** les éléments de filtrage fonctionnellement identiques (41, 42) sont conçus différemment de la symétrie du premier sous-disposition en ce que la séquence de commutation des éléments individuels (41.1, 41.2, 42.1, 42.2) des éléments de filtrage (41, 42) est conçue différemment.

3. Dispositif (10) selon la revendication 1 ou 2,
**où** les éléments de filtrage fonctionnellement identiques (41, 42) ont chacun comme éléments individuels au moins un élément de résistance (41.1, 42.1) et au moins un élément de bobine (41.2, 42.2), et sont de préférence chacun conçus comme un élément RL.

4. Dispositif (10) selon l'une des revendications précédentes,
**où** les dispositions de filtrage (20.1, 20.2) présentent principalement une topologie de circuit symétrique les uns par rapport aux autres, les topologies de circuit différant les unes des autres, en particulier uniquement par une disposition différente des éléments de filtrage (41, 42).

5. Dispositif (10) selon l'une des revendications précédentes,
**où** les éléments de filtrage (41, 42) comprennent chacun un élément de bobine (41.2, 42.2) et un autre élément (41.1, 42.1), en particulier un élément de résistance (41.1, 42.1), les éléments de bobine (41.2, 42.2) étant conçus avec une valeur de capacité sensiblement identique et/ou de construction identique et étant disposés sur une carte de circuit imprimé (11) de manière décalée dans l'espace l'un par rapport à l'autre.

6. Dispositif (10) selon l'une des revendications précédentes,
**où** le circuit d'adaptation (20) effectue un filtrage sur un signal électrique qui peut être transmis par les voies de transmission (15, 16) pour la transmission de données, de sorte que le signai est adaptable à une technologie de communication de transmission de données sans contact, de préférence par un filtrage passe-bande avec une fréquence centrale qui est adaptée à une fréquence porteuse de la technologie de communication.

7. Dispositif (10) selon l'une des revendications précédentes,
**où** le dispositif (10) pour effectuer la transmission de données sans contact au moyen d'une communication en champ proche est conçu comme une technologie de communication, où de préférence le circuit d'adaptation (20) pour le filtrage est conçu de telle sorte que le filtrage passe-bande peut être effectué avec une fréquence NFC comme fréquence centrale, de préférence une fréquence centrale d'au moins presque 13,56 MHz.

8. Dispositif (10) selon l'une des revendications précédentes,
**où** les éléments de filtrage fonctionnellement identiques (41, 42) sont fixés sur la carte de circuit imprimé (11) adjacente de manière décalée de telle sorte que l'interférence mutuelle des éléments de filtrage (41, 42) puisse être réduite, à savoir par les éléments individuels (41.1, 41.2) d'un premier élément de filtrage (41) sont disposés dans l'espace parallèlement aux différents éléments (42.1, 42.2) d'un deuxième élément de filtrage (42), les éléments fonctionnellement inégaux (41.1, 42.2) (41.2, 42.1) des éléments de filtrage (41, 42) étant disposés dans l'espace plus près les uns des autres que les éléments fonctionnellement égaux (41.1, 42.1) (41.2, 42.2).

9. Dispositif (10) selon l'une des revendications précédentes,
**où** les éléments de filtrage fonctionnellement identiques (41, 42) sont fixés sur une carte de circuit imprimé (11) adjacente de manière décalée de telle sorte qu'un couplage inductif entre les éléments de bobine (41.2, 42.2) des éléments de filtrage (41, 42) est réduit.

10. Dispositif (10) selon l'une des revendications précédentes,
**où** les éléments individuels des éléments de filtrage (41, 42) sont fixés sur une carte de circuit imprimé (11) adjacente de telle sorte que les éléments soient distants de 5 cm au maximum ou de 3 cm au maximum ou de 1 cm au maximum.

11. Dispositif (10) selon l'une des revendications précédentes,
**où** les dispositions de filtrage (20.1, 20.2) sont disposés l'un en face de l'autre et comprennent chacun un circuit résonnant série (12) et un circuit résonnant parallèle (13) pour le filtrage, qui sont de préférence reliés à un condensateur de couplage (60), les deux circuits résonnants série (13) comportant de préférence les éléments de filtrage (41, 42).

12. Dispositif (10) selon l'une des revendications précédentes,
**où** le moyen de traitement (50) est conçu pour recevoir des données d'authentification au moyen de la transmission de données, et peut être relié électriquement à un système électronique de véhicule (2) afin de transmettre les données d'authentification au système électronique de véhicule (2), dans lequel de préférence le dispositif (10) est conçu pour être intégré dans une poignée de porte (3) d'un véhicule (1).

13. Système de sécurité (4) pour un véhicule (1), comprenant
- un système électronique de véhicule (2),
- un dispositif (10) selon l'une des revendications précédentes.

14. Composant (3), en particulier poignée de porte (3), pour un véhicule (1), où le composant comprend un dispositif (10) selon l'une des revendications 1 à 12.
